# EUROPEAN PATENT SPECIFICATION

(11) **EP 0 488 591 B1**
(45) Date of publication and mention of the grant of the patent: **17.08.1994**
(21) Application number: 91310756.1
(22) Date of filing: 21.11.1991
(51) Int. Cl.: F16B 12/24, A47B 96/06

(54) **Shelving and mounting**
Regale und Beschlag dafür
Etagères et montage correspondant

(30) Priority: 21.11.1990 GB 9025279
(43) Date of publication of application: 03.06.1992
(73) Proprietor: RICHARD BURBIDGE LIMITED, Oswestry Shropshire SY11 1HZ (GB)
(72) Inventor: Adam, Ian Ross, Netherlee, Glasgow G44 3UR (GB)
(74) Representative: Shaw, Laurence

(56) References cited:
- FR-A- 1 337 031
- FR-A- 1 576 985
- GB-A- 2 226 945

## Description

This invention relates to shelving and is particularly concerned with the construction and mounting of a shelving system in relation to an upright or vertical support surface, such as a wall.

The term 'shelving' used herein embraces any structure or framework, whether furniture or otherwise, in which intersecting members (e.g. boards, planks or sheets) are to be mounted in a captive relation to one another.

A vast diversity of shelving constructions have been proposed hitherto - including free-standing and wall mounted variants.

For example, so-called 'cantilever' shelving, in which uprights are directly wall mounted and adjustable brackets clipped into place thereupon are simple in principle, but vulnerable to pulling away from a wall when secured by proprietary fixings driven at right angles into the wall.

Moreover, it is difficult to align the fastener fixing holes for the uprights of such shelving as precisely as necessary to ensure that the shelves are horizontal.

Similarly, a diversity of mounting, fastening or fixing devices have also been proposed.

Thus, for example, in the 'mounting art' it is known to drive a fixing into a mounting surface, such as a wall, at a 'downward' inclination to a wall - for example, a proprietary picture hook or bracket of folded metal incorporating an inclined mounting through-hole for separate (typically hardened) fastening pin.

This presents the fastening pin downwardly at a shallow angle, reducing the overall penetration depth and facilitating the driving in of the pin under impact.

However such picture hooks have generally been too frail or insubstantial to support securely a potentially great weight such as a loaded shelving system would entail.

GB-A-2226945 discloses a wall mounting and demountable carrier unit which is fixed to the wall by means of inclined pins extending downwardly from the unit into pre-formed holes in the wall or extending upwardly from the wall in to pre-formed holes in the unit.

The present invention aims to provide an improved suspended shelving system.

Accordingly the invention provides a suspended shelving system comprising a plurality of shelves for interconnection with a plurality of upright supports, the upright supports being secured to a support surface and having inclined holes to receive inclined mounting pins, and a transverse bar bridging the upright supports, characterised in that the transverse bar is a mounting bar secured to the support surface and arranged to lie between the support surface and the upright supports, the mounting bar having inclined holes to receive the inclined mounting pins that are received in the upright supports and which inclined holes are below the securement of the mounting bar to the support surface.

Thus the present invention provides a shelving construction which is effectively 'hung' or suspended from below a surface (e.g. wall) fastener or other fixing - and moreover one in which the latter incorporates downwardly inclined pins.

There now follows a description of some particular embodiments of the invention, by way of example only, with reference to the accompanying schematic and diagrammatic drawings, in which:
Figure 1A, 1B, 1C and 1D show diagrams of forces for wall mounted shelf loading;
Figure 2 shows a side elevation of wall mounted shelving with a mounting bar or support ledge;
Figure 3 shows a side elevation of wall mounted shelving with adjustable support uprights;
Figure 4 shows a front elevation of shelving incorporating a support ledge of the kind shown in Figure 2 and 3;
Figure 5 shows a side elevation of the shelving shown in Figure 4;
Figure 6 shows a plan view of one configuration of an individual shelving support upright for the arrangements shown in Figure 2 through 5;
Figure 7 shows an alternative support upright configuration to that shown in Figure 6;
Figure 8 shows a plan view of alternative configurations of individual shelf; and
Figures 9A and 9B show alternative edge profiles for the shelf of Figure 8.

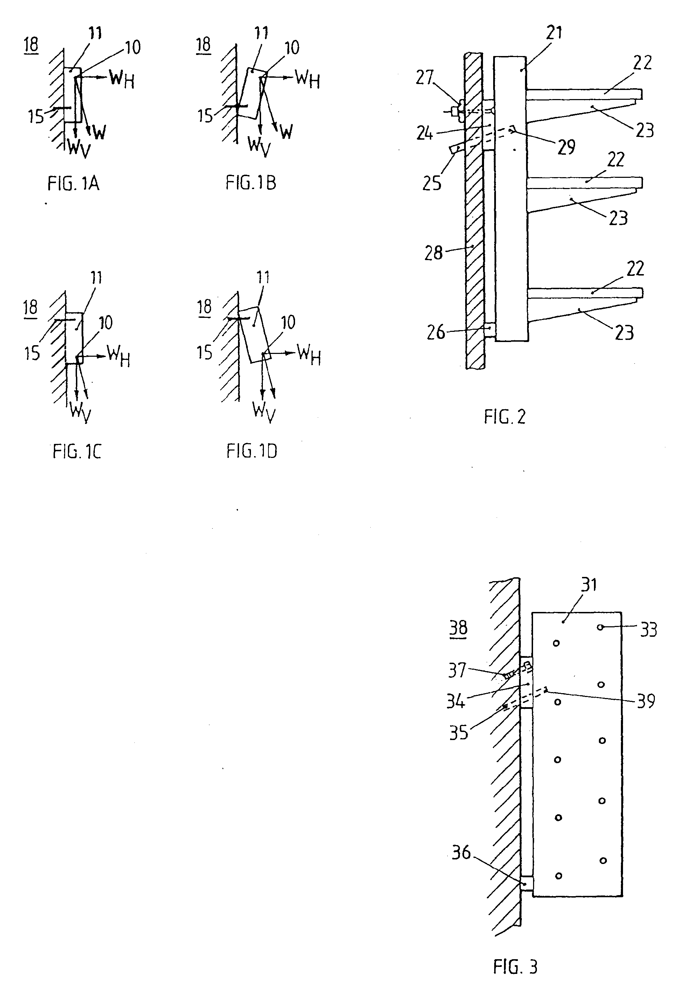

Referring to the drawings, an analysis of surface mounting loads is depicted in Figure 1A through 1D, in which an element 11, such as a support bar for shelving (not shown), is mounted upon a support surface, in this case a wall 18, by a transverse fastener 15.

Thus a suspended weight W, associated with the imposition through the element 11, of a load - such as shelving - necessarily spaced somewhat outwardly from the wall 18, can be resolved into two orthogonal forces.

Specifically, there arises a downward vertical component Wv - which tends to apply shear and bending loads to the wall fastener 15, and a horizontal component Wh which tends to pull the fastener 15 directly outwardly from the wall 18 and also applies a bending moment.

In practice, for multiple shelving, most (say 75%) of the applied load is downward, with a residual (say 25%) horizontal.

The ability of proprietary wall fasteners 15 to resist these loads varies according to their individual design characteristics and the nature of the wall (i.e. solid or cavity construction) - but generally such fasteners are effective in direct shear (i.e. across their section), but cannot readily resist 'outward or pulling' loads applied directly along the fastener axis.

For example, wall fasteners, such a synthetic plastics plugs, relying upon an expanding wedge action or interference fit sleeve or toggle are vulnerable to such direct extraction loads.

These loads thus tend to withdraw the fastener out from the wall, undermining or destroying their effectiveness.

Even in the case of cavity wall fixings, in which an expanded or turned element lies along the rear or inside wall surface transversely to the fastener axis, excess axial pull can tear the rear toggle through wall board.

By varying the position of the wall fastener 15 in relation to the (notional or effective) application point 10 of the suspended load W, so the effect of these horizontal and vertical loads is radically altered.

The present invention relies upon an appreciation of this and how to utilise it.

In Figure 1A and 1B the wall fastener 15 is mounted below the suspension of application point 10 of the load W.

In this case both the horizontal load component Wh and the vertical load component Wv have co-operative (clockwise) turning couples or bending moments about the fastener 15.

These tend to tilt the element 11 away from the wall 18 and lever or prise the fastener 15 away from the wall 18, as shown in Figure 1B- with the potentially disastrous consequences for the security of the load.

Figure 1C shows an alternative and preferred mounting arrangement according to the principle of the invention, in which the load application point 10 is below the fastener 15.

In this case the vertical load component Wv has no adverse bending moment about the fastener, or any minimal such load that arises is resisted by abutment of the lower rear face of the element 11 with the wall region below the fastener 15.

Similarly, the horizontal load component Wh has a counter-clockwise turning component about the fastener - as depicted in Figure 1D - which opposes, or cancels, any clockwise turning component associated with the vertical load Wv.

The net resultant loads upon the fastener are essentially transverse shear loads, which the fastener is generally well able to resist.

By combining this geometry with a fastener driven, not directly horizontally, but at a shallow downward angle, using a transverse mounting bar and using a deeper and more substantial fastener pin (which need not be a special expanding type) the load capability of mounting can be enhanced.

Figures 2 through 9 show various shelving systems incorporating this approach.

Thus Figure 2 shows a wall mounted shelving construction in which an array of individual shelves 22 rest upon underside support brackets 23, themselves mounted (optionally, adjustably) upon support uprights 21 secured to, and bridged by, a transverse support ledge or bar 24.

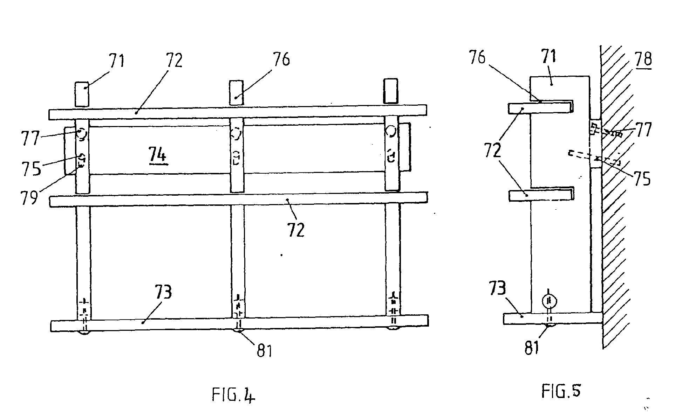

The uprights 21 are located at or near the ends of the shelves 22 and, depending upon the shelf span, at one or more intermediate locations for example in the manner depicted in Figure 4, described later.

It is the support bar 24 which is surface mounted, in this case upon a cavity wall 28, by downwardly inclined fixing pins 25, located in corresponding downward (drilled) passages 29 in the bar 24 and aligned downward passages in the associated upright 21 and in the wall 28.

In order to inhibit casual demounting of an upright 21, the downwardly inclined mounting pin 25 is supplemented by a proprietary (e.g. expanding toggle) cavity wall fixing 27.

The upright 21 is spaced somewhat from the wall 28 by the intervening mounting bar 24, but is inhibited from tilting by supplementary passive spacer bar 26 of corresponding depth. For greater security, additional fixings may be applied through this spacer bar.

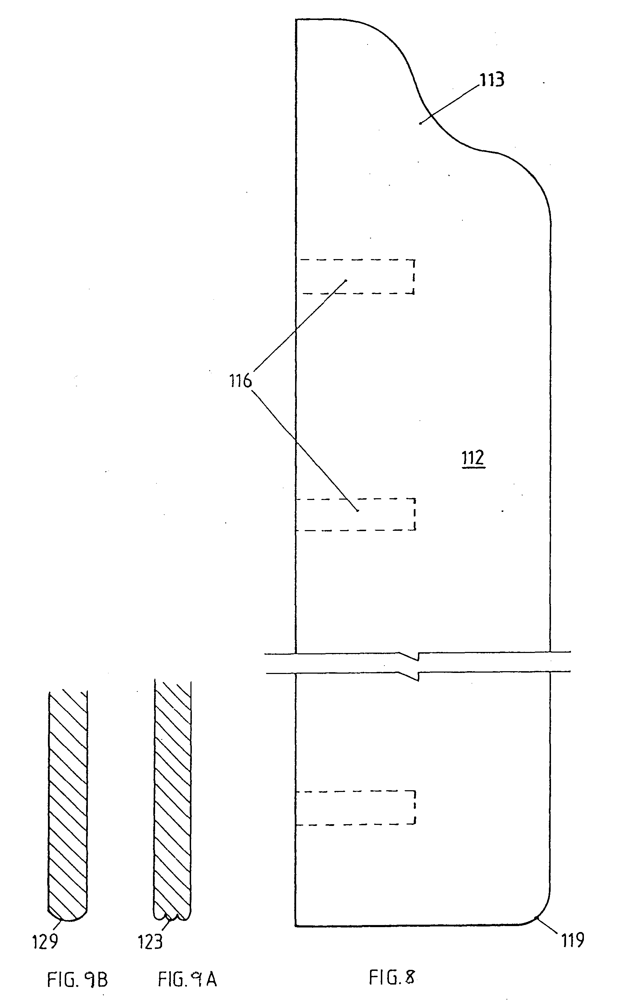

The shelves 22, uprights 21 and mounting/space bars 24,26 may be fabricated of timber, either natural or synthetic board with a veneer or laminated finish surface - and Figures 8, 9A and 9B show various configurations.

The actual mounting angle employed for the pin 25 may be varied according to the particular situation and load bearing characteristics of the wall 28.

A compromise angle of 45 degrees may suit the average environment, yet with variations of 30 to 60 degrees admitted.

Figure 3 shows a variation of the Figure 2 shelving mounting arrangement, in which an upright 31 incorporates an array of mounting holes 33 to facilitate the adjustable installation of shelves or shelf brackets, not themselves shown in this drawing.

The upright 31 is secured to a transverse (and indeed horizontal) mounting bar 34 itself secured to a (solid) wall 38 by a proprietary (e.g. expanding sleeve of interference wedge fit masonry) fastener 37 and a downwardly inclined support pin 35 located in a hole drilled directly through the bar 34 into the wall 38.

A bracing or spacer bar 36 complements the bar 37, as with the Figure 2 arrangement.

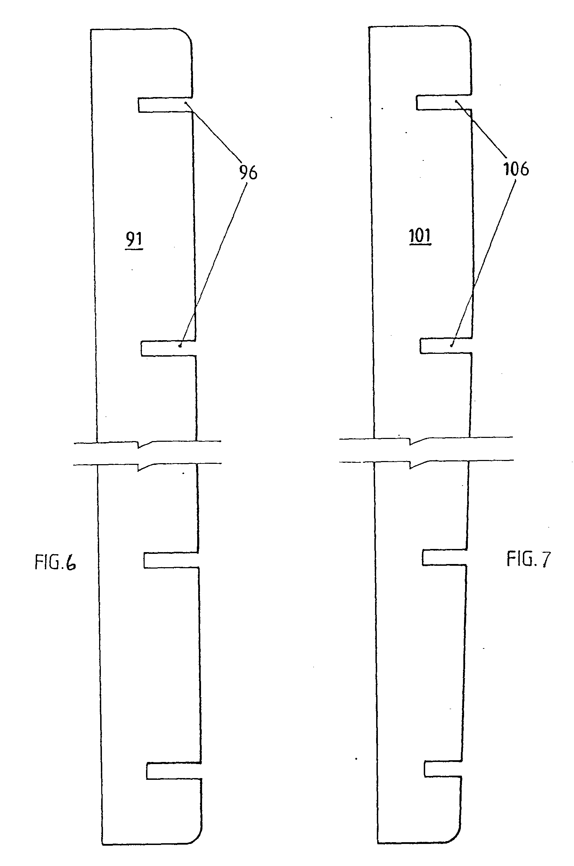

Figures 4 and 5 show a shelving array incorporating a transverse support or mounting bar 74 secured to a (solid) wall 78 through downwardly inclined pins 75 and proprietary (solid) wall fixings 77.

The mounting bar 74 is at the upper end of the uprights so that most of the shelves, i.e. two out of the three - hang downwardly below it.

Again for overall rigidity, the shelves 72 are located, as a tight interference fit, in a serious of vertically-spaced horizontal slots 76 in the uprights 71.

The lower shelf 73 is secured to the underside ends of the uprights by releasable captive cabinet bolt fittings 81.

The pins 75 are located in holes 79 drilled part way through the depth of the uprights 71 and entirely through the mounting bar 74, before entry into downwardly inclined holes drilled into the wall 78.

A variety of assembly and mounting sequences can be employed. For example, the entire pre-fabricated assembly of shelves and uprights - aside from the mounting bar 74 - may be offered up, with depending mounting pins 75, to a mounting bar 74 already positioned upon the wall 78, using the proprietary fixings.

It is easier to set the mounting bar 74 horizontal initially, if necessary by drilling entirely through it at one end for the first fixing and then using one end for the first fixing and then using a spirit level with that first fixing as a pivot to set the bar, before drilling at the other end.

In this way, the pins 75 remain entirely concealed within the uprights 71 and the wall 78 and yet the shelves and uprights may readily be removed as an assembly from the mounting bar 74.

This facilitates access for cleaning and decorating and indeed the shelves and uprights may be reassembled in a different configuration and re-mounted.

Aesthetically, the upright profile may be varied whilst retaining the shelf support and spacing function.

Thus, Figure 6 shows a rectangular profile upright 91, of indefinite length, with four or more shelf slots 96.

Figure 7 shows an alternative tapered profile of upright 101, with side slots 106, to that of Figure 6.

Similarly, the shelf profile itself admits of considerable variation, as depicted in Figure 8, in which a generally rectangular profile shelf 112 has optional curved profile (front or forward) ends, such as a complex re-entrant curve 113 or a simple radius curve 119 and intervening slots 116.

As further optional elaborations aside from square edge board, Figure 9A shows a multiple fluted shelf edge profile 123 and Figure 9B shows a simple radius curved shelf edge profile 124.

## Claims

1. A suspended shelving system comprising a plurality of shelves (22,72,73) for interconnection with a plurality of upright supports (21,31,71), the upright supports (21,31,71) being secured to a support surface (28,38,78) and having inclined holes to receive inclined mounting pins (25,35,75), and a transverse bar bridging the upright supports, characterised in that the transverse bar is a mounting bar (24,34,74) secured to the support surface (28,38,78) and arranged to lie between the support surface (28,38,78) and the upright supports (21,31,71), the mounting bar (24,34,74) having inclined holes to receive the inclined mounting pins (25,35,75) that are received in the upright supports (21,31,71) and which inclined holes are below the securement (27,37,47) of the mounting bar (24,34,74) to the support surface (28,38,78).

2. A suspended shelving system according to Claim 1, characterised in that the majority of shelves (22,72,73) are mounted below the inclined mounting pins (25,35,75).

## Patentansprüche

1. Hängeregalsystem mit einer Mehrzahl von Regalen (22, 72, 73), die mit einer Mehrzahl von Stehstützteilen (21, 31, 71) verbunden werden, wobei die Stehstützteile (21, 31, 71) an einer Stützfläche (28, 38, 78) befestigt werden und geneigte Löcher zur Aufnahme von geneigten Montagebolzen (25, 35, 75) aufweisen und eine Querstange die Stehstützteile überbrückt, dadurch gekennzeichnet, daß die Querstange eine an der Stützfläche (28, 38, 78) befestigte Montagestange ist und zwischen die Stützfläche (28, 38, 78) und die Stehstützteile (21, 31, 71) zu liegen kommt, wobei die Montagestange (24, 34, 74) geneigte Löcher zur Aufnahme der geneigten Montagebolzen (25, 35, 75) aufweist, die von den Stehstützteilen (21, 31, 71) aufgenommen werden und wobei die geneigten Löcher sich unterhalb der Befestigungsstelle (27, 37, 47) der Montagestange (24, 34, 74) an der Stützfläche (28, 38, 78) befinden.

2. Hängeregalsystem nach Anspruch 1, dadurch gekennzeichnet, daß die Mehrheit der Regale (22, 72, 73) unterhalb der geneigten Montagebolzen (25, 35, 75) montiert werden.

## Revendications

1. Système de rayonnage suspendu comprenant une série d'étagères (22, 72, 73) qui s'entrecroisent avec une série de montants verticaux (21,31,71), les montants verticaux (21,31,71) étant fixés à une surface de support (28,38,78) et étant pourvus de trous inclinés pour recevoir des chevilles de montage inclinées (25,35,75) et une barre transversale reliant les montants verticaux, système caractérisé en ce que la barre transversale est une barre de montage (24,34,74) fixée à la surface de support (28,38,78) et disposée de manière à se trouver entre la surface de support (28,38,78) et les montants verticaux (21,31,71), cette barre de montage (24,34,74) étant pourvue de trous inclinés pour recevoir les chevilles de montage inclinées (25,35,75) qui sont à leur tour fixées dans les montants verticaux (21,31,71), ces trolls inclinés se trouvant en-dessous du point de fixation (27,37,47) de la barre de montage (24,34,74) à la surface de support (28,38,78).

2. Système de rayonnage suspendu qui, selon la revendication 1, est caractérisé en ce que la majorité des étagères (22,72,73) sont montées en-dessous des chevilles de montage inclinées (25,35,75).
